# EUROPEAN PATENT SPECIFICATION

(11) **EP 0 585 309 B1**
(45) Date of publication and mention of the grant of the patent: **11.09.1996**
(21) Application number: 92910774.6
(22) Date of filing: 28.05.1992
(51) Int. Cl.: B60K 31/10

(54) **A SPEED CONTROL UNIT**
GESCHWINDIGKEITSKONTROLLVORRICHTUNG
REGULATEUR DE VITESSE

(30) Priority: 29.05.1991 GB 91115444
(43) Date of publication of application: 09.03.1994
(73) Proprietor: ROMATIC LIMITED, Salford M5 4RE (GB)
(72) Inventor: NIELD, Eric Leslie, Stalybridge, Cheshire SK15 2UF (GB)
(74) Representative: Downey, William Gerrard
(86) International application number: GB9200966
(87) International publication number: WO9221530

(56) References cited:
- EP-A- 0 214 849
- AU-A- 503 666
- FR-A- 2 258 657
- GB-A- 2 051 419
- GB-A- 2 107 491
- US-A- 3 070 185

## Description

The present invention relates to a speed control unit for a vehicle.

Such speed control units are already known and operate satisfactorily. One is described in the applicant's European Patent Application No. EP-A-0 214 849. Although satisfactory in operation, the unit is complex and this can lead to difficulties with maintenance.

It is an object of the invention to mitigate these problems.

According to the present invention, there is provided, a speed control unit for a vehicle, comprising a pressure fluid operable piston and cylinder device adapted to be connected to the throttle control of the engine of the vehicle, a valve for controlling the pressure of fluid fed to the piston and cylinder device in dependence upon an electrical signal, characterised by the electrical signal comprising a series of pulses, input to the valve, such that the pressure is proportional to a voltage derived from the series of pulses and circuit means comprising means for producing a reference signal corresponding to a maximum speed, means for producing a signal representing actual speed and means for processing the two signals and for varying the mark space ratio of the pulses in order to vary the fluid pressure output from the valve and thereby the throttle control of the vehicle as maximum speed is approached.

In a preferred embodiment of the invention, a signal is produced having a frequency proportional to actual vehicle speed. This may be generated from the vehicle tachograph or from sensors on a rotating member of the vehicle transmission or gearbox. The signal is filtered and fed via a frequency to voltage converter to one input of an amplifier/integrator circuit. Another input to this circuit receives a reference signal produced from a variable resistor representing the maximum desired speed cf the vehicle. The output from the amplifier/integrator circuit is fed to one input of a comparator the other input of which is connected to a triangle wave generator. The comparator output comprises a series of pulses the mark/space ratio of which is varied in dependence upon the output from the amplifier/integrator. This varying ratio in turn varies the pressure output from the valve. A fault detection circuit and a prolonged overspeed detector are also advantageously provided.

In order that the invention may be more clearly understood, one embodiment thereof will now be described by way of example, with reference to the accompanying drawings in which:-
Figure 1 shows a block circuit of the electrical part of a speed control unit according to the invention, and
Figure 2 shows the mechanical part of the unit of Figure 1.

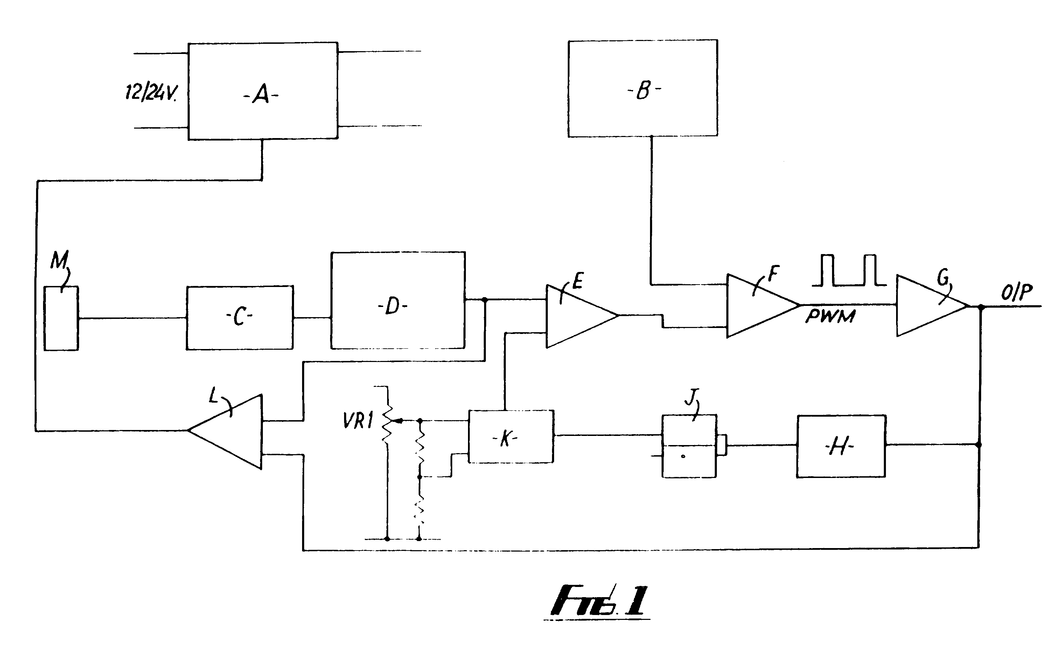

Referring to Figure 1, the circuit means comprises a power supply A, triangle wave generator B, filter C, frequency to voltage converter D, amplifer/integrator E, comparator F, amplifier G, timer H, flip-flop J, Switch K, variable resistor VR1, pulse generator M and fault detection circuit L.

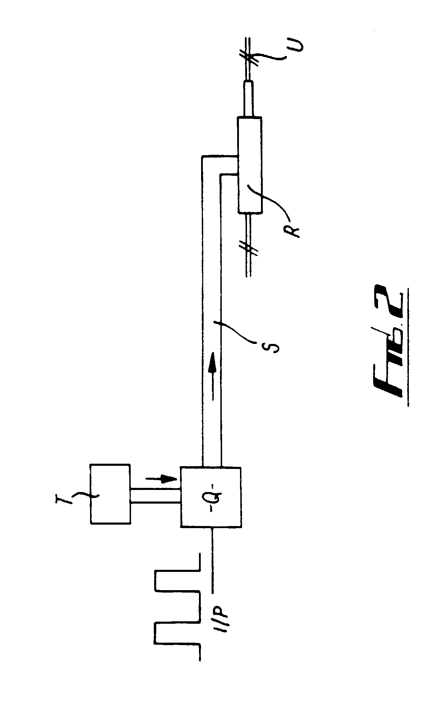

Referring to Figure 2, the mechanical part of the unit comprises a solenoid valve Q and, pneumatic piston and cylinder device R linked by a pneumatic pressure line S. The valve Q is connected to the output from amplifier G and to a source of air T. The piston and cylinder device is connected to the vehicle throttle linkage U. in operation, referring to both figures 1 and 2 the power supply unit A accepts 12 or 24 volts from the vehicle supply and converts this to a regulated voltage for the electronic circuits. Suppression components are included to reduce the effect of interference from the vehicle electrics and also a dedicated surge suppressor to allow the input voltage to rise to 180 volts without permanent damage to any component. These components and suppressors are not specifically shown.

Generator B, generates a triangular warveform, which is used to produce a pulse width modulated (PWM) signal at the output of the comparator F.

The speed of the vehicle is detected by one of several methods, all of which generate by means of generator M a signal having a frequency proportional to road speed. This signal is fed into the conditioning filter C, which removes undesirable signals before reaching the frequency to voltage convertor D. Generator M may. utilize the tachometer or sensors on the gearbox or transmission to generate the speed related signal.

The frequency to voltage convertor D converts the input frequency signal to a DC voltage signal which is directly proportional to the input speed. The output voltage is amplified by the amplifier/integrator E, which is also compared with a reference voltage set by variable resistor VR1. The output from comparator E is a smooth DC voltage proportional to speed and also dependant upon the reference voltage set by VR1. That is, if the reference voltage is low then the output from amplifier/integrator E will reach the required value at a low speed. As the reference voltage on the resistor VR1 is increased then the speed of the vehicle must be higher to give the required output from amplifier/integrator E.

The output from amplifier/integrator E is fed to one input of the comparator F and compared with the triangular waveform generated by the generator B. As the DC voltage from amplifier/integrator E rises the output from the comparator begins to give an output pulse which is on for a short time and off for a long time (short mark/space ratio). As the voltage rises the on pulse length increases and the off pulse length decreases until the off pulse is very short and the on pulse is long. Although the output from comparator F is pulsing, the average voltage is increasing. This voltage is fed to the power amplifier G which operates the solenoid valve Q. (The solenoid is special in so far as with a fixed input pressure, the output pressure is proportional to the voltage applied to it in the form of a pulse width modulated (PWM) voltage). Thus the overall effect of an increasing frequency from the speed sensor is to increase the output pressure from the solenoid valve Q. This increasing pressure from the valve Q is fed to the air cylinder which in turn progressively closes the vehicle throttle. Thus as the vehicle approaches the maximum speed set by variable resist VR1 the throttle is progressively closed to a position appropriate to that maximum speed.

The following auxiliary circuits of the system do not have a direct bearing on the basic operation, but enhance the overall operation.

Fault detection circuit L monitors the output to the valve Q and the speed of the vehicle as sensed at the output of the frequency to voltage convertor E. The fault condition occurs if the output to the valve Q is demanding a reduction in speed (that is the output is trying to energise the valve Q) when the speed is zero. The circuit L senses this condition and a "crowbar" circuit causes the power supply A to be isolated from the vehicle electrics by blowing the main fuse. A fault indicator (not shown) lights to display this condition. The safety aspect of this action is that should the valve be in an energised state, resulting in no throttle when the vehicle is stationary, then there is a high probability that a fault has occurred in the circuit and the safest course of action is to revert the vehicle to standard operation.

Circuit H detects a prolonged overspeed such as could occur on long downhill stretches if the vehicle is knocked out of gear. The circuit H monitors the time for which the vehicle is at a speed over the set speed and if this occurs for 10 seconds an audible warning is given. Should the speed condition still remain for a further 5 seconds then the flip-flop J is triggered which operates the switch K and reduces the reference voltage to 75%. This has the effect of reducing the speed which can be achieved, when normal running is recovered, to 75% of the original set speed. The only way of cancelling this condition is by turning off the ignition.

The overall control system is made into a closed loop by the pressure from the valve operating pneumatic piston and cylinder device R in the throttle linkage U when the set speed is attained. As mentioned above, the effect is to reduce the amount of throttle until there is just sufficient to maintain the desired speed. The pulse width modulated PWM control carefully modulates the pressure as more or less throttle is required for the road condition.

For example, if the vehicle is going downhill, the speed will tend to rise. This causes the valve Q to increase the pneumatic pressure which operates the piston and cylinder device thereby closing the throttle the necessary amount to maintain the set speed.

If the vehicle is going uphill the pneumatic pressure will decrease opening the throttle the necessary amount to control at the set speed, or open the throttle fully if the set speed cannot be attained.

## Claims

1. A speed control unit for a vehicle, comprising a pressure fluid operable piston and cylinder device (R) adapted to be connected to the throttle control of the engine of the vehicle, a valve (Q) for controlling the pressure of fluid fed to the piston and cylinder device in dependence upon an electrical signal, characterised by the electrical signal comprising a series of pulses, input to the valve (Q), such that the pressure is proportional to a voltage derived from the series of pulses and circuit means comprising means (VR1) for producing a reference signal corresponding to a maximum speed, means (M) for producing a signal representing actual speed and means (E,F) for processing the two signals and for varying the mark space ratio of the pulses in order to vary the fluid pressure output from the valve and thereby the throttle control of the vehicle as maximum speed is approached.

2. A speed control unit as claimed in claim 1 in which the means (M) for producing a signal representing actual speed comprises means for producing a signal having a frequency proportional to actual speed.

3. A speed control unit as claimed in claim 2, in which the means (M) for producing a signal comprises sensors adapted to be disposed on a rotating member of the vehicle transmission or gearbox.

4. A speed control unit as claimed in claim 3, in which the means for processing comprises filter means (C) for filtering the signal having a frequency proportional to actual speed.

5. A speed control unit as claimed in claim 4, in which the filter means (C) are connected to a frequency to voltage converter (D).

6. A speed control unit as claimed in claim 5, in which the frequency to voltage converter (D) is connected to an amplifier/integrator circuit (E).

7. A speed control unit as claimed in claim 6, in which the amplifier/integrator circuit (E) is connected to receive the signal representing actual speed.

8. A speed control unit as claimed in claim 7, in which the means for producing a reference signal representing maximum speed comprises a variable resistor (VR1).

9. A speed control unit as claimed in claim 6, 7 or 8, in which the output from the amplifier/integrator (E) is fed to one input of a comparator (E), the other input of which is connected to a triangle wave generator (B).

10. A speed control unit as claimed in claim 9, in which the comparator (F) produces the pulses the mark/space ratio of which is varied in dependence upon the output from the amplifier/integrator circuit (E).

11. A speed control circuit as claimed in any preceding claim, in which a fault detection circuit (L) is provided.

12. A speed control circuit as claimed in any preceding claim, in which a prolonged overspeed detector (H) is provided.

## Patentansprüche

1. Geschwindigkeitskontrolleinheit für ein Fahrzeug, umfassend eine durch Druckflüssigkeit betätigbare Kolben- und Zylindervorrichtung (R), die mit der Drosselsteuerung des Motors des Fahrzeuges verbunden werden kann, ein Ventil (Q) zur Steuerung des der Kolben- und Zylindervorrichtung zugeführten Flüssigkeitsdrucks abhängig von einem elektrischen Signal, gekennzeichnet durch das elektrische Signal, das eine Folge von Impulsen umfaßt, die in das Ventil (Q) eingegeben werden derart, daß der Druck zu einer von der Impulsfolge abgeleiteten Spannung proportional ist, und ein Schaltungsmittel, umfassend ein Mittel (VR1) zur Erzeugung eines Referenzsignals, das einer Maximalgeschwindigkeit entspricht, Mittel (M) zur Erzeugung eines Signals, das die tatsächliche Geschwindigkeit darstellt, und Mittel (E, F) zur Verarbeitung der beiden Signale und zur Änderung des Tastverhältnisses der Impulse, um den von dem Ventil ausgegebenen Flüssigkeitsdruck und dadurch die Drosselsteuerung des Fahrzeuges zu ändern, wenn die maximale Geschwindigkeit angenähert wird.

2. Geschwindigkeitskontrolleinheit nach Anspruch 1, bei der das Mittel (M) zur Erzeugung eines Signals, das die tatsächliche Geschwindigkeit darstellt, Mittel zur Erzeugung eines Signals umfaßt, das eine zur tatsächlichen Geschwindigkeit proportionale Frequenz aufweist.

3. Geschwindigkeitskontrolleinheit nach Anspruch 2, bei der das Mittel (M) zur Erzeugung eines Signals Sensoren umfaßt, die auf einem Element des Fahrzeuggetriebes oder Schaltgetriebes angeordnet werden können.

4. Geschwindigkeitskontrolleinheit nach Anspruch 3, bei der das Mittel zur Verarbeitung Filtermittel (C) zum Filtern des Signals umfaßt, das eine Frequenz proportional zur tatsächlichen Geschwindigkeit aufweist.

5. Geschwindigkeitskontrolleinheit nach Anspruch 4, bei der die Filtermittel (C) mit einem Frequenz-zu-Spannungsumsetzer (D) verbunden sind.

6. Geschwindigkeitskontrolleinheit nach Anspruch 5, bei der der Frequenz-zu-Spannungsumsetzer (D) mit einem Verstärker/Integrierkreis (E) verbunden ist.

7. Geschwindigkeitskontrolleinheit nach Anspruch 6, bei der der Verstärker/Integrierkreis (E) angeschlossen ist, um das die tatsächliche Geschwindigkeit darstellende Signal aufzunehmen.

8. Geschwindigkeitskontrolleinheit nach Anspruch 7, bei der das Mittel zur Erzeugung eines Referenzsignals, das die maximale Geschwindigkeit darstellt, einen veränderlichen Widerstand (VRl) umfaßt.

9. Geschwindigkeitskontrolleinheit nach Anspruch 6, 7 oder 8, bei der die Ausgabe aus dem Verstärker/Integrator (E) dem einen Eingang eines Komparators (E) zugeführt wird, dessen anderer Eingang an einen Dreieckwellengenerator (B) angeschlossen ist.

10. Geschwindigkeitskontrolleinheit nach Anspruch 9, bei der der Komparator (F) die Impulse erzeugt, deren Tastverhältnis abhängig von der Ausgabe des Verstärkers/Integrierkreises (E) geändert wird.

11. Geschwindigkeitskontrolleinheit nach einem beliebigen vorhergehenden Anspruch, bei der ein Störungserfassungskreis (L) vorgesehen ist.

12. Geschwindigkeitskontrolleinheit nach einem beliebigen vorhergehenden Anspruch, bei der ein Detektor (H) für verlängerte Drehzahlüberschreitung vorgesehen ist.

## Revendications

1. Unité de commande de vitesse pour véhicule, comprenant un dispositif à piston et cylindre (R) susceptible de fonctionner sous l'action d'un fluide sous pression et adapté pour être relié à la commande par étranglement du moteur du véhicule, une soupape (Q) pour commander la pression d'un fluide fourni au dispositif à piston et cylindre, en fonction d'un signal électrique, caractérisée par le fait que le signal électrique comprend une série d'impulsions, amenées à la soupape (Q), de manière que la pression soit proportionnelle à une tension déduite de la série d'impulsions et des moyens à circuit comprenant des moyens (VR1) pour produire un signal de référence correspondant à une vitesse maximale, des moyens (M) pour produire un signal représentant la vitesse réelle et les moyens (EF) pour traiter les deux signaux et pour faire varier le rapport durée/absence des impulsions, de manière à faire varier le débit de fluide sous pression sortant de la soupape et ainsi la commande par étranglement du véhicule à l'approche de la vitesse maximale.

2. Unité de commande de vitesse selon la revendication 1, dans laquelle les moyens (M), pour produire un signal représentant la vitesse réelle, comprennent un moyen pour produire un signal de fréquence proportionnelle à la vitesse réelle.

3. Unité de commande de vitesse selon la revendication 2, dans laquelle les moyens (M) pour produire un signal comprennent des capteurs adaptés pour être disposés sur un organe rotatif de la transmission ou de la boîte de vitesses du véhicule.

4. Unité de commande de vitesse selon la revendication 3, dans laquelle les moyens de traitement comprennent des moyens de filtrage (C) destinés à filtrer le signal de fréquence proportionnelle à la vitesse réelle.

5. Unité de commande de vitesse selon la revendication 4, dans laquelle les moyens de filtrage (C) sont connectés à un convertisseur fréquence-tension (D).

6. Unité de commande de vitesse selon la revendication 5, dans laquelle le convertisseur fréquence-tension (D) est connecté à un circuit amplificateur/intégrateur (E).

7. Unité de commande de vitesse selon la revendication 6, dans laquelle le circuit amplificateur/intégrateur (E) est connecté pour recevoir le signal représentant la vitesse réelle.

8. Unité de commande de vitesse selon la revendication 7, dans laquelle les moyens pour produire un signal de référence représentant la vitesse maximale comprennent une résistance variable (VR1).

9. Unité de commande de vitesse selon les revendications 6, 7 ou 8, dans laquelle la sortie venant de l'amplificateur/intégrateur (E) est fournie à une entrée d'un comparateur (F), dont l'autre entrée est connectée à un générateur d'ondes triangulaires (B).

10. Unité de commande de vitesse selon la revendication 9, dans laquelle le comparateur (F) produit les impulsions dont le rapport durée/absence est modifiée en fonction de la sortie du circuit amplificateur/intégrateur (E).

11. Unité de commande de vitesse selon l'une quelconque des revendications précédentes, dans lequel un circuit de détection d'erreurs (L) est prévu.

12. Unité de commande de vitesse selon l'une quelconque des revendications précédentes, dans lequel un détecteur de sur-vitesse prolongée (H) est prévu.
